(19) Europäisches Patentamt / European Patent Office / Office européen des brevets

(11) **EP 0 986 115 B1**

(12) **EUROPEAN PATENT SPECIFICATION**

(45) Date of publication and mention
of the grant of the patent:
**11.03.2015 Bulletin 2015/11**

(51) Int Cl.:
**H01M 4/131** *(2010.01)*    **H01M 4/525** *(2010.01)*
**C01G 45/12** *(2006.01)*    **C01G 51/00** *(2006.01)*
**C01G 53/00** *(2006.01)*     *H01M 10/052* *(2010.01)*

(21) Application number: **98921826.8**

(22) Date of filing: **27.05.1998**

(86) International application number:
**PCT/JP1998/002319**

(87) International publication number:
**WO 1998/054768 (03.12.1998 Gazette 1998/48)**

(54) **ELECTRODE FOR NON-AQUEOUS ELECTROLYTIC CELLS**

ELEKTRODE FÜR NICHTWÄSSRIGE ELEKTROLYTISCHE ZELLEN

ELECTRODE POUR CELLULES ELECTROLYTIQUES NON AQUEUSES

(84) Designated Contracting States:
**DE FR GB**

(30) Priority: **27.05.1997   JP 13665897**

(43) Date of publication of application:
**15.03.2000   Bulletin 2000/11**

(73) Proprietors:
• **TDK Corporation
Tokyo 108-0023 (JP)**
• **Duracell, A Division of the Gillette Company
Bethel, CT 06801 (US)**

(72) Inventors:
• **IIJIMA, Tadayoshi
Saku-shi,
Nagano 385-0004 (JP)**
• **KUROSE, Shigeo
Nagano 385-0004 (JP)**
• **TAKAHASHI, Tetsuya
Kitasaku-gun,
Nagano 389-0206 (JP)**
• **Adamson, David V.
Ashland,
Massachusetts 01720 (US)**
• **Chi, Ignacio
Dracut,
Massachusetts 01826 (US)**
• **Cintra, George
Holliston,
Massachusetts 017466 (US)**

• **Ramaswami, Karthik
Framingham,
Massachusetts 01701 (US)**

(74) Representative: **Kilian Kilian & Partner
Aidenbachstraße 54
81379 München (DE)**

(56) References cited:
**EP-A- 0 501 187     EP-A- 0 718 902
WO-A-96/13873     JP-A- 6 267 539
JP-A- 7 230 808     JP-A- 9 219 190
JP-A- 10 074 517**

• **PATENT ABSTRACTS OF JAPAN vol. 1995, no. 09, 31 October 1995 (1995-10-31) -& JP 07 142056 A (SANYO ELECTRIC CO LTD), 2 June 1995 (1995-06-02)**
• **PATENT ABSTRACTS OF JAPAN vol. 1995, no. 04, 31 May 1995 (1995-05-31) -& JP 07 006763 A (TORAY IND INC), 10 January 1995 (1995-01-10)**
• **PATENT ABSTRACTS OF JAPAN vol. 1998, no. 08, 30 June 1998 (1998-06-30) -& JP 10 059725 A (SAKAI CHEM IND CO LTD), 3 March 1998 (1998-03-03)**
• **PATENT ABSTRACTS OF JAPAN vol. 1998, no. 04, 31 March 1998 (1998-03-31) -& JP 09 309728 A (ISHIHARA SANGYO KAISHA LTD), 2 December 1997 (1997-12-02)**

**Description**

TECHNICAL FIELD OF THE INVENTION

The present invention relates to an electrode for a non-aqueous electrolyte battery, and more particularly to a non-aqueous electrolyte battery electrode which contains lithium composite oxide as an active material, which can give a large capacity to a battery, and which is excellent in high-rate characteristics.

TECHNICAL BACKGROUND OF THE INVENTION

Recent development of devices in the electronic field is remarkable, and various devices such as video cameras, liquid crystal cameras, portable telephones, laptop computers, and word processors are now being developed. In accordance therewith, there are increasing needs for reduction in size and weight and achievement of high energy density in batteries that are to be used as power sources for these electronic devices.

Conventionally, lead batteries or nickel-cadmium batteries have been used for these electronic devices. These conventional batteries cannot sufficiently meet the needs for reduction in size and weight and achievement of high energy density.

Accordingly, there are proposed non-aqueous electrolyte batteries using a non-aqueous electrolytic solution containing a lithium salt dissolved in a non-aqueous solvent. As these non-aqueous electrolyte batteries, batteries in which a metal lithium, a lithium alloy, or a carbon material capable of being doped and undoped with lithium ions is used as a negative electrode material and a lithium cobalt composite oxide is used as a positive electrode material are already in practical use.

Having a high operation voltage of 3 to 4V, the non-aqueous electrolyte batteries of this type can be made to have a high energy density and excellent cycle characteristics with only a small amount of self-discharge.

Also, in order to attain further reduction in size and weight and achievement of high energy density in these non-aqueous electrolyte batteries, eager researches for development of active materials and the like are now being carried out. As positive electrode active materials, Ni-containing lithium composite oxides such as lithium-nickel composite oxides and lithium-nickel-cobalt composite oxides are also proposed.

WO9613873 discloses a positive electrode active material comprising lithium composite oxide with an average particle diameter of from 0.1 to 50 microns, particle size distribution measured in terms of volume cumulative distribution and a specific surface area between 0.01 and 50 $m^2$/g.

DISCLOSURE OF THE INVENTION

Objects of the Invention

However, on examining the characteristics of lithium composite oxide, the present inventors have found out that the high-rate characteristics and cycle characteristics of a battery using lithium composite oxide as an electrode material vary greatly depending on a particle size distribution and a BET specific surface area of lithium composite oxide particles. Lithium ion secondary batteries are often used in notebook-type personal computers. Here, a hard disk drive of a personal computer sometimes requires a large electric current, although momentarily. In this respect, there is a need for a battery excellent in high-rate characteristics.

Therefore, the object of the present invention is to solve the above-mentioned problems of the prior art and to provide a non-aqueous electrolyte battery electrode that can give a large capacity to a battery and is excellent in high-rate characteristics.

Summary of the Invention

The present inventors have made an eager research and found out that the above-mentioned problems can be solved by using, as an electrode active material, a lithium composite oxide having a specific surface area as measured by the BET method in a particular range, thereby completing the present invention.

Accordingly, the present invention provides a method for the preparation of a non-aqueous electrolyte battery electrode as specified in claim 1. Moreover, the present invention provides an electrode for a non-aqueous electrolyte battery, prepared by the method of the present invention and containing a lithium composite oxide as an active material, wherein said lithium composite oxide satisfies a relationship $1.5 \leq Sa/Sc \leq 10$, where a specific surface area of said lithium composite oxide as measured by the BET method is represented by Sa, a particle diameter of said lithium composite oxide is represented by r, a particle size distribution of said lithium composite oxide is represented by f(r), a density of said lithium composite oxide is represented by d, and Sc is a value defined by the following formula (I):

$$Sc = \frac{6}{d} \int_{0}^{\infty} \frac{f(r)}{r} dr \qquad (I)$$

In the present invention, the lithium composite oxide preferably satisfies a relationship $2 \leq Sa/Sc \leq 8$.

In the present invention, the lithium composite oxide is preferably $Li_xNi_yM_zO_2$, where x satisfies $0.8 < x < 1.5$, y+z satisfies $0.8 < y+z < 1.2$, z satisfies $0 \leq z < 0.35$, and M is at least one element selected from Co, Mg, Ca, Sr, Al, Mn and Fe.

The electrode of the present invention can give a large capacity to a battery and can provide a battery being excellent in high-rate characteristics and cycle characteristics, since a lithium composite oxide having a specific surface area Sa as measured by the BET method in a particular range (i.e. $1.5 \leq Sa/Sc \leq 10$) is used as the electrode active material.

Detailed Description of the Invention

In the present invention, a lithium composite oxide is used as an active material. Examples of the lithium composite oxides to be used include $Li_xCoO_2$ ($0 < x \leq 1.0$), $Li_xNiO_2$ ($0 < x \leq 1.0$), $Li_{1+x}Mn_{2-x}O4$ ($0 \leq x \leq 1/3$), $Li(M, Mn)_2O_4$ (M = Cr, Co, Al, B), and others.

In the present invention, it is particularly suitable in obtaining large capacity with low costs that the lithium composite oxide is $Li_xNi_yM_zO_2$ (where x satisfies $0.8 < x < 1.5$, y+z satisfies $0.8 < y+z < 1.2$, z satisfies $0 \leq z < 0.35$, and M is at least one element selected from Co, Mg, Ca, Sr, Al, Mn and Fe). In this case, the metal M is more preferably Co, and may be two or more kinds of the metals.

An example of a method for producing such a lithium composite oxide is, for example, a process in which a basic metal salt and an alkaline water-soluble lithium compound containing respectively an anion that volatilizes at the time of calcination of $LiMetal^{3+}O_2$ (where the Metal contains Ni as a major component and further contains at least one element selected from Co, Mg, Ca, Sr, Al, Mn and Fe) are allowed to react in an aqueous medium to obtain a slurry, which is then dried and calcined.

The basic metal salt is represented by the general formula: $Metal^{2+}(OH)_{2-nk}(A^{n-})_k \cdot mH_2O$. Here, the $Metal^{2+}$ is an ion containing Ni as a major component and possibly containing at least one element selected from Co, Mg, Ca, Sr, Al, Mn and Fe. $A^{n-}$ represents an anion with n valences (where n=1 to 3) such as a nitrate ion, a chloride ion, a bromide ion, an acetate ion, or a carbonate ion. Further, k satisfies $0.03 \leq k \leq 0.3$; and m satisfies $0 \leq m < 2$.

The basic metal salt represented by the above-mentioned formula can be produced by adding to an aqueous solution of $Metal^{2+}$ an alkali of about 0.7 to 0.95 equivalent, preferably about 0.8 to 0.95 equivalent, relative to the $Metal^{2+}$, and reacting them under a reaction condition of about 80°C or less, and then maturing the reaction product at a temperature of 40°C to 70°C for 0.1 to 10 hours, followed by washing with water to remove the by-products. The alkali to be used in the reaction may be a hydroxide of an alkali metal such as sodium hydroxide, a hydroxide of an alkali earth metal such as calcium hydroxide, an amine, or the like.

A basic metal salt selected from the compounds represented by the above-mentioned formula and one or more lithium compounds selected from lithium hydroxide, lithium carbonate, hydrates thereof, and the like are allowed to react in water at a concentration in the range of 5 to 25 wt% and at a temperature in the range from room temperature to 100°C to obtain a slurry, which is then subjected to spray drying for improvement of uniformity in the shape of the composition to be obtained.

The lithium composite oxide can be obtained by subjecting the dried product to a thermal treatment for calcination in an oxidizing gas atmosphere containing air, oxygen, ozone, or the like in a temperature range of about 700 to 1000°C for about 0.1 to 20 hours.

Another example of a method for producing a lithium composite oxide to be used in the present invention is a process that uses a water-soluble lithium compound and a basic metal carbonate obtained from a water-soluble metal compound.

The water-soluble metal compound to be used in this process is a nitrate, a sulfate, a metal chloride, or the like. This water-soluble metal compound may contain a nickel compound as a major component and may be mixed with a given amount of another water-soluble metal compound so that at least one element selected from Co, Mg, Ca, Sr, Al, Mn and Fe may be blended therewith.

The basic metal carbonate may be obtained by filtrating and drying a precipitate obtained by allowing a mixture of the above-mentioned water-soluble metal compounds to react with a compound selected from the group consisting of an alkali carbonate, an alkali bicarbonate, ammonium carbonate and ammonium bicarbonate in water, or a precipitate obtained by allowing sodium hydroxide to be present for reaction in the above-mentioned reaction system. In this case, in order to produce a good precipitate, it is preferable to use a little excessive amount of the carbonate, and also it is important to control the stirring condition so as to control the specific surface area of the precipitate.

To the basic metal carbonate thus obtained, a powder of a water-soluble lithium compound such as lithium carbonate or lithium hydroxide is added at a desired ratio of the metal to Li. The resultant mixture in a powder state is first heated to 300 to 500°C in the presence of an inert gas or an oxygen-containing gas. This heating allows only the decomposition of the basic metal carbonate to proceed, whereby carbonic acid gas in the crystal structure is released. This heating is continued until the generation of the carbonic acid gas substantially stops so as to convert all of the basic metal carbonate into a metal oxide having numerous fine pores.

After the generation of carbonic acid gas substantially stops, the temperature is further raised to allow the molten water-soluble lithium compound to penetrate into the fine pores of the metal oxide, whereby the two compounds will be in an extremely close contact. At this moment, the resultant product is calcined at a temperature of 700 to 900°C in the presence of oxygen gas or an air rich in oxygen, whereby Ni is turned from bivalent to trivalent to produce a Li composite oxide.

Here, the larger the specific surface area of the basic metal carbonate to be used is (for example, more than 100 $m^2/g$), the more preferable it is, because gas discharge and generation of fine pores after preliminary calcination will be more efficiently performed.

Preferably, the lithium composite oxide obtained by the above step is used after it is dried to reduce its water content, or alternatively, the lithium composite oxide is maintained in a dry state from immediately after its production. By these operations, it is possible to avoid decrease in the battery capacity, increase in the impedance, and deterioration of the preservation property that are caused by large water content in the active material, thereby realizing a battery having a high energy density.

Among the above-mentioned ones, the lithium composite oxide to be used in the present invention must have the following particular specific surface area as measured by the BET method.

Namely, the ratio of Sa to Sc (Sa/Sc) of said lithium composite oxide must satisfy a relationship $1.5 \leq Sa/Sc \leq 10$, where a specific surface area of said lithium composite oxide as measured by the BET method is represented by Sa, a particle diameter of said lithium composite oxide is represented by r, a particle size distribution of said lithium composite oxide is represented by f(r), a density of said lithium composite oxide is represented by d, and Sc is a value defined by the following formula (I):

$$Sc = \frac{6}{d} \int_0^\infty \frac{f(r)}{r} \, dr \qquad (I)$$

Here, the particle size distribution f(r) is measured by the laser diffraction/scattering method and can be measured, for example, by means of a microtrack particle size analyzer (manufactured by Nikkiso Co., Ltd.).

The particle size distribution f(r) satisfies:

$$1 = \int_0^\infty f(r) \, dr$$

and the ratio of particles having a particle diameter within the range from $r_a$ to $r_b$ relative to the total particles is represented by:

$$\int_{r_a}^{r_b} f(r)\,dr$$

In the laser particle size distribution meter, a set of particle diameter ranges can be determined, and for each range, the ratio of particles having a particle diameter falling within the range relative to the total particles can be measured. For example, it is assumed that the particle diameters are partitioned by values $R_1, \ldots R_n, \ldots R_x$ that are arranged in the increasing order, and the ratio of particles having a particle diameter falling within a range from $R_n$ to $R_{n+1}$ relative to the total particles is determined to be $P_n$ by measurement.

Assuming that $r_n = (R_n + R_{n+1})/2$, the following equation is calculated:

$$\int_{0}^{\infty} \frac{f(r)}{r}\,dr = \sum_{n=1}^{x-1} \frac{P_n}{r_n}$$

The above formula is used to determine the value of

$$\int_{0}^{\infty} \frac{f(r)}{r}\,dr$$

recited in the claims by actual measurement. Here, it is necessary that at least the particles having a particle diameter smaller than $R_1$ and the particles having a particle diameter larger than $R_x$ are not contained in the active material, so that the following equation holds:

$$\sum_{n=1}^{x-1} P_n = 1$$

In carrying out the calculation, since it is necessary to unify the units of these numerical values, it is assumed that the specific surface area as measured by the BET method is Sa ($m^2/g$), the particle diameter is r (m), and the density is d ($g/m^3$).

The specific surface area S of a complete spherical particle is $S = 6/(d \cdot r)$, and Sc as determined by the above formula (I) is a quantity of state as developed from a true sphere. In other words, Sc can be considered as being a specific surface area of an ensemble of virtual true-sphere lithium composite oxide particles having various particle diameters.

Therefore, the ratio (Sa/Sc) of Sa to Sc can be considered as a measure indicating the degree of deviation of the lithium composite oxide particles from true spheres, the smoothness of the surface state, and the relative degree of fine pores located inside. The battery characteristics are influenced by contact of the active material with the electrolytic solution and by contact of the active material with the electrically conductive agent. The contact of the active material with the electrolytic solution is related to the liability of reaction between the lithium ions and the active material, and the contact of the active material with the electrically conductive agent is related to the flow of electrons.

If the ratio (Sa/Sc) is smaller than 1.5, there arises a problem that the high-rate characteristics will be poor. Also, it is generally difficult to obtain lithium composite oxide particles with Sa/Sc being smaller than 1.5, so that it is impractical. On the other hand, if the ratio is greater than 10, there is a possibility that the high-rate characteristics will be poor or the cycle characteristics will be poor. The ratio (Sa/Sc) preferably satisfies 2≤Sa/Sc≤8, more preferably 5≤Sa/Sc≤8.

In the present invention, the lithium composite oxide may have any shape, for example, a spherical shape or an amorphous shape, as long as the lithium composite oxide has a specific surface area Sa, as measured by the BET method, that satisfies the above ratio (Sa/Sc).

The ratio (Sa/Sc) of the lithium composite oxide can be controlled in the following manner. For example, regarding Sa, if the temperature for calcining the lithium composite oxide is raised, Sa will be smaller because the irregularity (unevenness) of its surface will be reduced to decrease the surface area. On the other hand, if the calcining temperature is lowered, the reverse of the above is likely to occur, so that the lithium composite oxide with larger Sa will be obtained. The ratio (Sa/Sc) can be controlled also by adjusting the size of primary particles and the size of secondary particles (degree of agglomeration of primary particles).

The electrode of the present invention can be fabricated by kneading the specific lithium composite oxide as mentioned above, an electrically conductive agent, and a binder together with an organic solvent to prepare a mixture-coating material and applying the mixture-coating material onto a collector followed by drying it.

The electrically conductive agent to be used in the present invention is not specifically limited and may be any electron-conducting material that does not undergo a chemical change. Examples of the electrically conductive agent typically include graphites such as natural graphite (vein graphite, flake graphite and others) and artificial graphite, carbon blacks such as acetylene black, Ketjen black, channel black, furnace black, and thermal black, electrically conductive fibers such as carbon fiber, carbon fiber grown in gaseous phase, and metal fiber, and metal powders such as copper, nickel, aluminum, and silver. Among these, flake graphite is preferable.

Specifically, the electrically conductive agent may be one of the LF series manufactured by Chuetsu Graphite Works Co., Ltd., the UFG series manufactured by Showa Denko Co., Ltd., the KS series manufactured by LONZA Co., Ltd., MICROCARBO-G series manufactured by Kansai Netsukagaku Co., Ltd., Ecoscarbons manufactured by Ecos Giken Co., Ltd., Denka Blacks manufactured by Denki Kagaku Kogyo K.K., and others.

The amount of the electrically conductive agent to be blended is preferably 1 to 15 wt%, more preferably 2 to 10 wt%, in a dried coating film, although it depends on the specific surface area of the active material and the like.

The binder to be used in the present invention is one or a mixture of two or more of thermoplastic resins or polymers having a rubber elasticity. Examples of the binders to be used include fluorine-type polymers, polyvinyl alcohol, carboxymethyl cellulose, hydroxypropyl cellulose, regenerated cellulose, diacetyl cellulose, polyvinyl chloride, polyvinyl pyrrolidone, polyethylene, polypropylene, EPDM, sulfonated EPDM, SBR, polybutadiene, polyethylene oxide, and the like.

Among these, the fluorine-containing polymer preferably has an atomic ratio of fluorine atoms/carbon atoms in the range of 0.75 to 1.5, more preferably in the range of 0.75 to 1.3. If this value is larger than 1.5, it tends to be difficult to obtain a sufficient capacity of the battery. On the other hand, if it is smaller than 0.75, the binder is likely to be dissolved in the electrolytic solution.

Examples of such fluorine-containing polymers include polytetrafluoro-ethylene, polyvinylidene fluoride, vinylidene fluoride-ethylene trifluoride copolymers, ethylene-tetrafluoroethylene copolymers, propylene-tetrafluoroethylene copolymers, and the like. A fluorine-containing polymer with its hydrogen in the main chain substituted by an alkyl group(s) may be used as well.

Among these, those showing a selective solubility (having a low solubility in the electrolytic solution and being soluble in some solvents). For example, vinylidene fluoride-type polymers are only slightly soluble in a carbonate-type solvent that is used as the electrolytic solution or the like, but are soluble in a solvent such as N,N-dimethylformamide or N-methylpyrrolidone.

The amount of the binder to be added is preferably 1 to 15 wt%, more preferably 2 to 10 wt%, in a dried coating film, although it depends on the specific surface areas and the particle size distributions of the active material and the electrically conductive agent, the strength of the intended electrode, and the like.

The solvent to be used for the preparation of the electrode active material mixture-coating material is not specifically limited and may be a general organic solvent. Examples of the organic solvents include saturated hydrocarbons such as hexane, aromatic hydrocarbons such as toluene and xylene, alcohols such as methanol, ethanol, propanol, and butanol, ketones such as acetone, methyl ethyl ketone, methyl isobutyl ketone, diisobutyl ketone, and cyclohexanone, esters such as ethyl acetate and butyl acetate, ethers such as tetrahydrofuran, dioxane, and diethyl ether, amides such as N,N-dimethylformamide, N-methylpyrrolidone, and N,N-dimethylacetamide, halogenated hydrocarbons such as ethylene chloride and chlorobenzene, and the like. Among these, ketone-type and amide-type solvents are preferable because they can dissolve the fluorine-containing polymers. These solvents may be used either alone or as a mixture of two or more thereof.

The prepared mixture-coating material is applied onto a collector and dried. The collector is not specifically limited and may be any electron-conducting substance that does not undergo a chemical change when it is formed into a battery. For example, the collector may be formed of aluminum, an aluminum alloy, nickel, stainless steel, titanium, or the like. Besides these metals, aluminum or stainless steel whose surface is treated with carbon, nickel, or titanium may be used as well. Especially, aluminum or an aluminum alloy is preferable. The collector may have a foil-like, film-like, net-like, porous, foamed, or the like shape. The thickness of the collector is 1 to $100\mu$m, preferably 1 to $50\mu$m.

The electrode active material mixture-coating material is applied onto the collector by an ordinary well-known coating method such as the reverse roll method, direct roll method, blade method, knife method, extrusion nozzle method, curtain method, gravure roll method, bar coat method, dip method, kiss coat method, squeeze method, and the like. Among these, it is preferable to adopt the extrusion nozzle method, whereby a good surface state of the coating layer can be obtained by suitably selecting the solvent composition of the mixture and the drying condition so that the coating material is applied onto the collector at a coating speed of 5 to 100 m/min.

The drying temperature is preferably 30 to 150°C, more preferably 50 to 140°C. If the drying temperature is less than 30°C, the solvent will not be sufficiently dried. On the other hand, if the drying temperature exceeds 150°C, the binder may not be distributed uniformly on the surface of the electrode because the evaporation speed of the solvent is too high, thereby leading to deterioration in the electrode properties.

Here, the thickness, length, and width of the coating layer is determined by the final size of the battery to be obtained. The thickness of the coating layer is preferably adjusted by the ordinarily-adopted press processing after the coating step. The processing pressure is preferably 0.2 to 10 t/cm, and the processing temperature is preferably 10 to 150°C.

BRIEF DESCRIPTION OF THE DRAWINGS

Fig. 1 is a graph showing a result of measurement of a particle size distribution of a lithium composite oxide used in Example 1 of the present invention. It shows particle diameter r ($\times 10^{-6}$ m) vs. frequency f(r).

Fig. 2 is a cross-sectional view illustrating a coin-type battery used in examples of the present invention for measurement of battery characteristics.

MODE FOR CARRYING OUT THE INVENTION

Hereafter, the present invention will be more specifically explained with reference to examples shown below. However, the present invention is not limited by these examples.

[EXAMPLE 1]

Nickel nitrate and cobalt nitrate were mixed in an aqueous solution in a ratio of Ni/Co (molar ratio) = 0.8/0.2 to form a precipitate, which was dried by a spray dryer to yield approximately spherical particles. These particles and lithium hydroxide were mixed in a ratio of Li/Ni/Co (molar ratio) = 1/0.8/0.2, and the resultant mixture was calcined to obtain $LiNi_{0.8}Co_{0.2}O_2$. The particle size distribution of the particles obtained by classification of the above product was measured by means of a microtrack particle size analyzer (manufactured by Nikkiso Co., Ltd.) with the result that the average particle diameter was $10 \times 10^{-6}$ m. The specific surface area as measured by the BET method was 0.3 $m^2$/g, the density was $5.0 \times 10^6$ $g/m^3$, and the ratio Sa/Sc was found to be 2.5 by the result of measurement of the particle size distribution.

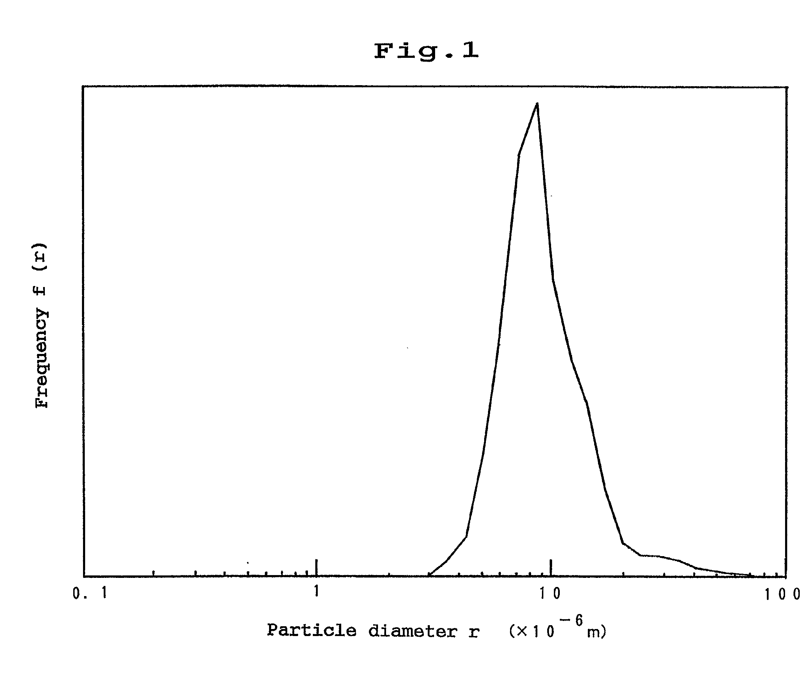

The result of measurement of the particle size distribution is shown in Table 1 and Fig. 1. Fig. 1 shows the result of Table 1 in a graph, and shows particle diameter r ($\times 10^{-6}$ m) vs. frequency f(r).

Table 1

| | Particle Diameter | | |
|---|---|---|---|
| n | $r_n$(m)($\times 10^{-6}$) | $P_n$ ($\times 10^{-2}$) | $P_n/r_n$ ($\times 10^4$) |
| 1 | 0.3 | 0 | 0 |
| 2 | 0.4 | 0 | 0 |
| 3 | 0.5 | 0 | 0 |
| 4 | 0.6 | 0 | 0 |
| 5 | 0.8 | 0 | 0 |
| 6 | 0.9 | 0 | 0 |
| 7 | 1.1 | 0 | 0 |
| 8 | 1.3 | 0 | 0 |
| 9 | 1.6 | 0 | 0 |

(continued)

| n | Particle Diameter $r_n$ (m) ($\times 10^{-6}$) | $P_n$ ($\times 10^{-2}$) | $P_n/r_n$ ($\times 10^4$) |
|---|---|---|---|
| 10 | 1.9 | 0 | 0 |
| 11 | 2.2 | 0 | 0 |
| 12 | 2.5 | 0 | 0 |
| 13 | 3 | 0 | 0 |
| 14 | 3.6 | 0.29 | 0.0805556 |
| 15 | 4.3 | 0.79 | 0.1837209 |
| 16 | 5.1 | 2.78 | 0.545098 |
| 17 | 6 | 6.52 | 1.0866667 |
| 18 | 7.2 | 14.06 | 1.9527778 |
| 19 | 8.5 | 17.61 | 2.0717647 |
| 20 | 10 | 13.66 | 1.366 |
| 21 | 12 | 11.48 | 0.9566667 |
| 22 | 14 | 11 | 0.7857143 |
| 23 | 17 | 6.81 | 0.4005882 |
| 24 | 20 | 3.25 | 0.1625 |
| 25 | 24 | 2.6 | 0.1083333 |
| 26 | 29 | 2.74 | 0.0944828 |
| 27 | 34 | 2.35 | 0.0691176 |
| 28 | 40 | 1.76 | 0.044 |
| 29 | 48 | 1.3 | 0.0270833 |
| 30 | 57 | 0.7 | 0.0122807 |
| 31 | 68 | 0.3 | 0.0044118 |
| 32 | 74 | 0 | 0 |

$\sum P_n/r_n = 9.95 \times 10^4$ (l/m)

This lithium composite oxide was used as an active material to prepare an electrode mixture-coating material having the following blending composition.

(Composition of blending)

| Positive electrode active material: | |
|---|---|
| The above lithium composite oxide | 93 parts by weight |
| Electrically conductive agent: | |
| Graphite KS25 (manufactured by LONZA) | 4 parts by weight |
| Binder: ELF-ATOCHEM Japan KYNAR 741 | 3 parts by weight |
| polyvinylidene fluoride (PVDF) | |
| Solvent: N-methyl-2-pyrrolidone (NMP) | 67 parts by weight |

PVDF (3 parts by weight) was dissolved in NMP (27 parts by weight) to prepare a binder solution (30 parts by weight). The active material (93 parts by weight) and the electrically conductive agent (4 parts by weight) were mixed in dryness by a hypermixer, and the mixture was introduced into a pressure kneader. The above-mentioned binder solution (13 parts by weight) was added to the mixture, and the resultant was kneaded for 30 minutes while cooling the jacket of the pressure kneader with water. The kneaded product was taken out; and the binder solution (17 parts by weight) and NMP (40 parts by weight) were added to dissolve the product in the hypermixer to give an active material mixture-coating material.

The prepared mixture coating material was applied onto one surface of a collector made of aluminum foil of 20μm thickness by means of a blade coater and dried. Then, the obtained coated collector was press-molded by a roller press machine and cut into a given size to prepare an electrode of Example 1 having a mixture layer of 65$\mu$m thickness.

[EXAMPLE 2]

(Preparation of Active material)

LiNi$_{0.8}$Co$_{0.2}$O$_2$ was obtained by carrying out the steps in the same manner as in Example 1 up to the calcination step. The particle size distribution of the particles obtained by classification of the above product was measured by means of the microtrack particle size analyzer with the result that the average particle diameter was 22 $\times$ 10$^{-6}$ m. The specific surface area as measured by the BET method was 0.24 m$^2$/g, the density was 5.0 $\times$ 10$^6$ g/m$^3$, and the ratio Sa/Sc was found to be 4.4 by the result of measurement of the particle size distribution.

(Preparation of Electrode Mixture-Coating Material and Electrode)

An electrode mixture-coating material was prepared in the same manner as in Example 1 except that this lithium composite oxide was used as the active material to prepare an electrode of Example 2 having a mixture layer of 65$\mu$m thickness.

[EXAMPLE 3]

(Preparation of Active material)

LiNi$_{0.8}$Co$_{0.2}$O$_2$ was obtained by carrying out the steps in the same manner as in Example 1 until before the calcination step and by carrying out the calcination step with a lower calcining temperature than in Example 1. The particle size distribution of the particles obtained by classification of the above product was measured by means of the microtrack particle size analyzer with the result that the average particle diameter was 15 $\times$ 10$^{-6}$ m. The specific surface area as measured by the BET method was 0.58 m$^2$/g, the density was 5.0 $\times$ 10$^6$ g/m$^3$, and the ratio Sa/Sc was found to be 7.1 by the result of measurement of the particle size distribution.

(Preparation of Electrode Mixture-Coating Material and Electrode)

An electrode mixture-coating material was prepared in the same manner as in Example 1 except that this lithium composite oxide was used as the active material to prepare an electrode of Example 3 having a mixture layer of 65$\mu$m thickness.

[Comparative Example 1]

(Preparation of Active material)

LiNi$_{0.8}$Co$_{0.2}$O$_2$ was obtained by carrying out the steps in the same manner as in Example 3 up to the calcination step. The particle size distribution of the particles obtained by classification of the above product was measured by means of the microtrack particle size analyzer with the result that the average particle diameter was 30 $\times$ 10$^{-6}$ m. The specific surface area as measured by the BET method was 0.46 m$^2$/g, the density was 5.0 $\times$ 10$^6$ g/m$^3$, and the ratio Sa/Sc was found to be 11 by the result of measurement of the particle size distribution.

(Preparation of Electrode Mixture-Coating Material and Electrode)

An electrode mixture-coating material was prepared in the same manner as in Example 1 except that this lithium composite oxide was used as the active material to prepare an electrode of Comparative Example 1 having a mixture layer of 65$\mu$m thickness.

[Comparative Example 2]

(Preparation of Active material)

LiNi$_{0.8}$Co$_{0.2}$O$_2$ was obtained by carrying out the steps in the same manner as in Example 3 until before the calcination step and by carrying out the calcination step with a lower calcining temperature than in Example 3. The particle size distribution of the particles obtained by classification of the above product was measured by means of the microtrack particle size analyzer with the result that the average particle diameter was $17 \times 10^{-6}$ m. The specific surface area as measured by the BET method was 0.91 m$^2$/g, the density was $5.0 \times 10^6$ g/m$^3$, and the ratio Sa/Sc was found to be 10.8 by the result of measurement of the particle size distribution.

(Preparation of Electrode Mixture-Coating Material and Electrode)

An electrode mixture-coating material was prepared in the same manner as in Example 1 except that this lithium composite oxide was used as the active material to prepare an electrode of Comparative Example 2 having a mixture layer of 65$\mu$m thickness.

(Battery Characteristics)

The battery characteristics of each of the electrodes obtained in Examples 1 to 3 and Comparative Examples 1 to 2 were measured in the following manner.

Each of the obtained electrodes was dried for removal of residual moisture in the positive electrode active material layer to fabricate a circular positive electrode having a diameter of 15.5 mm. Separately, metal lithium having a thickness of 1.85 mm was cut into a circular shape with a diameter of 15.5 mm as a negative electrode. Further, a non-aqueous electrolyte solution was prepared by dissolving LiPF$_6$ at a concentration of 1 mol/liter in a mixture solvent containing ethylene carbonate and dimethyl carbonate at a ratio of 1:1 (volume ratio).

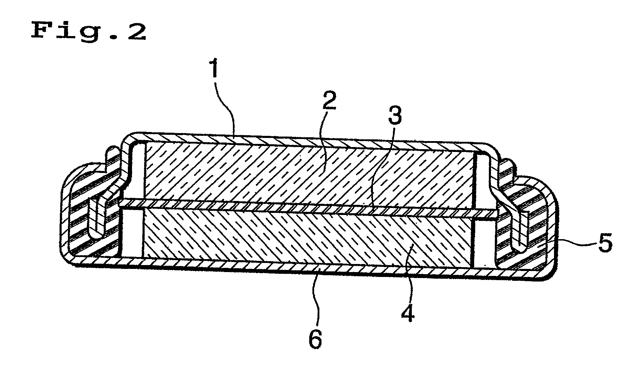

A coin-type battery having a diameter of 20 mm $\times$ thickness of 2.5 mm was prepared, as shown in Fig. 2, by using the non-aqueous electrolyte solution, the positive electrode, the negative electrode, a thin film separator made of polypropylene, a negative electrode cup, a positive electrode can, and a gasket. In the coin-type battery of Fig. 2, the positive electrode (4) housed in the positive electrode can (6) and the negative electrode (2) housed in the negative electrode cup (1) are laminated through the intermediary of the separator (3); and the positive electrode can (6) and the negative electrode cup (1) are caulked and sealed through the intermediary of the gasket (5). In Fig. 2, the collector is not shown.

The batteries thus fabricated were charged under a condition with a battery voltage of 4.2V and a charge current of 1mA, and then charged under a condition with a battery voltage of 4.2V and a charge time of 20 hours. The battery was then discharged under a condition with a discharge current of 1mA and a battery voltage of 3.0V to determine their charge/discharge capacities. Also, by setting the discharge current to be 10 mA, the ratio of the discharge capacity relative to the initial capacity was measured as the high-rate characteristics. The results are shown in Table 2.

Table 2

| | Initial Discharge Capacity (mAh/g) | Tenth Discharge Capacity (mAh/g) | High-Rate Characteristics |
|---|---|---|---|
| EXAMPLE 1 | 190 | 185 | 92% |
| EXAMPLE 2 | 187 | 184 | 89% |
| EXAMPLE 3 | 191 | 191 | 93% |
| COMPARATIVE EXAMPLE 1 | 183 | 184 | 82% |
| COMPARATIVE EXAMPLE 2 | 189 | 164 | 92% |

The batteries using the electrodes of Examples 1 to 3 each have a large discharge capacity, show a large discharge capacity at the tenth discharge time, and are excellent in the cycle characteristics. Also, they show large high-rate characteristics. Comparative Example 1 is inferior in the high-rate characteristics. Comparative Example 2 is inferior in the cycle characteristics.

The present invention can be carried out in any other embodiments without departure to the spirit and major characteristics of the present invention. Accordingly, the above examples are described merely for illustrative purposes and these should not be construed as restrictive. Further, any modification within the equivalent to the claims is intended to fall under the scope of the present invention.

INDUSTRIAL APPLICABILITY

As shown above, since a lithium composite oxide having a specific surface area Sa as measured by the BET method in a particular range (i.e. 1. 5 $\leq$Sa/Sc$\leq$10) is used as the electrode active material, the electrode of the present invention can give a large capacity to a battery and can provide a battery being excellent in high-rate characteristics and cycle characteristics.

The present invention contributes to improvement of high capacity characteristics of non-aqueous electrolyte batteries.

## Claims

1. A method for the preparation of a non-aqueous electrolyte battery electrode comprising the steps of

   (a) preparing/providing a lithium composite oxide,
   (b) measuring the particle size distribution of the lithium composite oxide obtained in step (a),
   (c) measuring the specific surface area of the lithium composite oxide obtained in step (a) by the BET method,
   (d) measuring the density of the lithium composite oxide obtained in step (a),
   (e) selecting a lithium composite oxide satisfying the relationship $1.5 \leq Sa/Sc \leq 10$, wherein Sa represents the specific surface area of the lithium composite oxide as measured by the BET method in step (c), and Sc is a value defined by the following formula (I):

$$Sc = \frac{6}{d} \int_{0}^{\infty} \frac{f(r)}{r} \, dr \qquad (I)$$

   wherein a particle diameter of the lithium composite oxide is represented by r, a particle size distribution of the lithium composite oxide is represented by f(r), and a density of said lithium composite oxide is represented by d,
   (f) preparing a coating material comprising the lithium composite oxide selected in step (e),
   (g) applying the coating material prepared in step (f) onto a collector, and, optionally, drying the coated material.

2. A method according to claim 1, wherein the lithium composite oxide satisfies a relationship $2 \leq Sa/Sc \leq 8$.

3. A method according to claim 1 or 2, wherein the lithium composite oxide is represented by the formula $Li_xNi_yM_zO_2$, wherein x satisfies $0.8 < x < 1.5$, y+z satisfies $0.8 < y+z < 1.2$, z satisfies $0 \leq z < 0.35$, and M is at least one element selected from Co, Mg, Ca, Sr, Al, Mn and Fe.

4. An electrode for a non-aqueous electrolyte battery prepared by a method according to at least one of claims 1 to 3, the electrode comprising a lithium composite oxide as an active material, wherein said lithium composite oxide satisfies the relationship $1.5 \leq Sa/Sc \leq 10$, wherein Sa represents the specific surface area of the lithium composite oxide as measured by the BET method, and Sc is a value defined by the following formula (I):

$$Sc = \frac{6}{d} \int_{0}^{\infty} \frac{f(r)}{r} \, dr \qquad (I)$$

   wherein a particle diameter of the lithium composite oxide is represented by r, a particle size distribution of the lithium composite oxide is represented by f(r), and a density of said lithium composite oxide is represented by d.

5. An electrode for a non-aqueous electrolyte battery according to claim 4, wherein the lithium composite oxide satisfies the relationship $2 \leq Sa/Sc \leq 8$.

6. An electrode for a non-aqueous electrolyte battery according to claim 4 or 5, wherein the lithium composite oxide is represented by the formula $Li_xNi_yM_zO_2$, wherein x satisfies $0.8 < x < 1.5$, y+z satisfies $0.8 < y+z < 1.2$, z satisfies $0 \leq z < 0.35$, and M is at least one element selected from Co, Mg, Ca, Sr, Al, Mn and Fe.

**Patentansprüche**

1. Verfahren zur Herstellung einer Elektrode für eine Batterie mit nichtwässrigem Elektrolyten, umfassend die Schritte:

   (a) Herstellen/Bereitstellen eines Lithiumkompositoxids,
   (b) Bestimmen der Partikelgrößenverteilung des in Schritt (a) erhaltenen Lithiumkompositoxids,
   (c) Bestimmen des spezifischen Oberflächenbereichs des in Schritt (a) erhaltenen Lithiumkompositoxids durch das BET-Verfahren,
   (d) Bestimmen der Dichte des in Schritt (a) erhaltenen Lithiumkompositoxids,
   (e) Auswählen eines Lithiumkompositoxids, welches die Beziehung $1{,}5 \leq Sa/Sc \leq 10$ erfüllt, wobei Sa den spezifischen Oberflächenbereich des Lithiumkompositoxids, der in Schritt (c) durch das BET-Verfahren bestimmt wurde, darstellt, und Sc ein Wert ist, der durch die folgende Formel (I) definiert wird:

$$Sc = \frac{6}{d} \int_{0}^{\infty} \frac{f(r)}{r} \, dr \qquad (I)$$

   wobei ein Partikeldurchmesser des Lithiumkompositoxids durch r dargestellt wird, eine Partikelgrößenverteilung des Lithiumkompositoxids durch f(r) dargestellt wird, und eine Dichte des Lithiumkompositoxids durch d dargestellt wird,
   (f) Herstellen eines Beschichtungsmaterials, welches das in Schritt (e) ausgewählte Lithiumkompositoxid umfasst,
   (g) Auftragen des in Schritt (f) hergestellten Beschichtungsmaterials auf einen Kollektor und, optional, Trocknen des Beschichtungsmaterials.

2. Verfahren gemäß Anspruch 1, wobei das Lithiumkompositoxid eine Beziehung $2 \leq Sa/Sc \leq 8$ erfüllt.

3. Verfahren gemäß Anspruch 1 oder 2, wobei das Lithiumkompositoxid durch die Formel $Li_xNi_yM_zO_2$ dargestellt wird, wobei x erfüllt: $0{,}8 < x < 1{,}5$, y+z erfüllt: $0{,}8 < y+z < 1{,}2$, z erfüllt: $0 \leq z < 0{,}35$, und M wenigstens ein Element ist, das aus Co, Mg, Ca, Sr, Al, Mn und Fe ausgewählt ist.

4. Elektrode für eine Batterie mit nichtwässrigem Elektrolyten, hergestellt durch ein Verfahren gemäß wenigstens einem der Ansprüche 1 bis 3, wobei die Elektrode ein Lithiumkompositoxid als aktives Material umfasst, wobei das Lithiumkompositoxid die Beziehung $1{,}5 \leq Sa/Sc \leq 10$ erfüllt, wobei Sa den spezifischen Oberflächenbereich des Lithiumkompositoxids, bestimmt durch das BET-Verfahren, darstellt, und Sc ein Wert ist, der durch die folgende Formel (I) definiert wird:

$$Sc = \frac{6}{d} \int_{0}^{\infty} \frac{f(r)}{r} \, dr \qquad (I)$$

   wobei ein Partikeldurchmesser des Lithiumkompositoxids durch r dargestellt wird, eine Partikelgrößenverteilung des Lithiumkompositoxids durch f(r) dargestellt wird, und eine Dichte des Lithiumkompositoxids durch d dargestellt wird.

5. Elektrode für eine Batterie mit nichtwässrigem Elektrolyten gemäß Anspruch 4, wobei das Lithiumkompositoxid die Beziehung $2 \leq Sa/Sc \leq 8$ erfüllt.

6. Elektrode für eine Batterie mit nichtwässrigem Elektrolyten gemäß Anspruch 4 oder 5, wobei das Lithiumkompositoxid durch die Formel $Li_xNi_yM_zO_2$ dargestellt wird, wobei x erfüllt: $0{,}8 < x < 1{,}5$, y+z erfüllt: $0{,}8 < y+z < 1{,}2$, z erfüllt: $0 \leq z < 0{,}35$, und M wenigstens ein Element ist, das aus Co, Mg, Ca, Sr, Al, Mn und Fe ausgewählt ist.

**Revendications**

1. Méthode de préparation d'une électrode de batterie à électrolyte non aqueux comprenant les étapes de

   (a) préparation/fourniture d'un oxyde composite de lithium,
   (b) mesure de la distribution de taille de particule de l'oxyde composite de lithium obtenu à l'étape (a),
   (c) mesure de la surface spécifique de l'oxyde composite de lithium obtenu à l'étape (a) par la méthode BET,
   (d) mesure de la densité de l'oxyde composite de lithium obtenu à l'étape (a),
   (e) sélection d'un oxyde composite de lithium satisfaisant la relation $1,5 \leq Sa/Sc \leq 10$, dans laquelle Sa représente l'aire spécifique de l'oxyde composite de lithium mesurée par la méthode BET à l'étape (c), et Sc est une valeur définie par la formule (I) suivante :

$$Sc = \frac{6}{d} \int_0^{\infty} \frac{f(r)}{r} \, dr \qquad (I)$$

   dans laquelle un diamètre de particule de l'oxyde composite de lithium est représenté par r, une distribution de taille de particule de l'oxyde composite de lithium est représentée par f(r), et une densité dudit oxyde composite de lithium est représentée par d,
   (f) préparation d'un matériau de revêtement comprenant l'oxyde composite de lithium sélectionné à l'étape (e),
   (g) application du matériau de revêtement préparé à l'étape (f) sur un collecteur et, facultativement, séchage du matériau revêtu.

2. Méthode selon la revendication 1, dans laquelle l'oxyde composite de lithium satisfait une relation $2 \leq Sa/Sc \leq 18$.

3. Méthode selon la revendication 1 ou 2, dans laquelle l'oxyde composite de lithium est représenté par la formule $Li_xNi_yM_zO_2$, dans laquelle x satisfait $0,8 < x < 1,5$, y + z satisfait $0,8 < y + z < 1,2$, z satisfait $0 \leq z < 0,35$, et M est au moins un élément sélectionné parmi Co, Mg, Ca, Sr, Al, Mn et Fe.

4. Électrode pour une batterie à électrolyte non aqueux préparée par une méthode selon au moins l'une des revendications 1 à 3, l'électrode comprenant un oxyde composite de lithium comme matériau actif, dans laquelle ledit oxyde composite de lithium satisfait la relation $1,5 \leq Sa/Sc \leq 10$, dans laquelle Sa représente l'aire spécifique de l'oxyde composite de lithium mesurée par la méthode BET, et Sc est une valeur définie par la formule (I) suivante :

$$Sc = \frac{6}{d} \int_0^{\infty} \frac{f(r)}{r} \, dr \qquad (I)$$

   dans laquelle un diamètre de particule de l'oxyde composite de lithium est représenté par r, une distribution de taille de particule de l'oxyde composite de lithium est représentée par f(r), et une densité dudit oxyde composite de lithium est représentée par d.

5. Électrode pour une batterie à électrolyte non aqueux selon la revendication 4, dans laquelle l'oxyde composite de lithium satisfait la relation $2 \leq Sa/Sc \leq 8$.

6. Électrode pour une batterie à électrolyte non aqueux selon la revendication 4 ou 5, dans laquelle l'oxyde composite de lithium est représenté par la formule $Li_xNi_yM_zO_2$, dans laquelle x satisfait $0,8 < x < 1,5$, y + z satisfait $0,8 < y + z < 1,2$, z satisfait $0 \leq z < 0,35$, et M est au moins un élément sélectionné parmi Co, Mg, Ca, Sr, Al, Mn et Fe.

Fig.1

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 9613873 A